# EUROPEAN PATENT SPECIFICATION

(11) **EP 3 675 074 B1**
(45) Date of publication and mention of the grant of the patent: **27.07.2022**
(21) Application number: 20154106.7
(22) Date of filing: 05.06.2018
(51) Int. Cl.: G08B 17/107, G01N 21/53

(54) **SYSTEMS AND METHODS FOR CHAMBERLESS SMOKE DETECTION AND INDOOR AIR QUALITY MONITORING**
SYSTEME UND VERFAHREN ZUR KAMMERLOSEN RAUCHERKENNUNG UND ÜBERWACHUNG DER RAUMLUFTQUALITÄT
SYSTÈMES ET PROCÉDÉS DE DÉTECTION DE FUMÉE SANS CHAMBRE ET SURVEILLANCE DE LA QUALITÉ D'AIR INTÉRIEUR

(30) Priority: 05.06.2017 US 201762515039 P; 09.06.2017 US 201762517614 P; 15.06.2017 WO PCT/US2017/037659; 15.01.2018 US 201815871931
(43) Date of publication of application: 01.07.2020
(62) Divisional of application: 18176075.2
(73) Proprietor: Kidde Technologies, Inc., Wilson, NC 27896-8630 (US)
(72) Inventor: LINCOLN, David L., East Hartford, CT Connecticut 06108 (US); ALEXANDER, Jennifer M., East Hartford, CT Connecticut 06108 (US); BIRNKRANT, Michael J., East Hartford, CT Connecticut 06108 (US); HARRIS, Peter R., East Hartford, CT Connecticut 06108 (US)
(74) Representative: Dehns

(56) References cited:
- EP-A1- 3 029 648
- US-A- 4 111 559
- US-A1- 2002 153 499

## Description

The present invention relates to smoke detection and indoor air quality monitoring. Some example embodiments relate to chamberless smoke detectors and air quality detection and monitoring for aircraft.

Smoke sensors, such as smoke detectors used on aircraft, often located inside of a cabin, bathroom or cargo area, use near infrared light, or lights of other wavelengths, scattering inside a small plastic chamber located inside of the enclosure, with inlets of controlled dimensions to prevent entry of unwanted particles. Such a smoke sensor is known e.g. from EP 3 029 648 A1.

However, some unwanted airborne particles do make their way into the chamber, causing false alarms. Over time, these particles may also collect at the inlets of the sensor chamber, making it more difficult for smoke particles to diffuse into the chamber. Additionally, particles collecting on chamber surfaces may increase sensitivity thereby resulting in more frequent false or nuisance alarms. Moreover, the enclosure of some detectors can be covered over, thereby inhibiting the detection capabilities.

To alleviate some of these issues, chamber-less smoke detectors may be used. However, with no chamber there is not a physically well-protected measurement volume, meaning a well-defined operational strategy is key to maintaining measurement integrity. Additionally, the lights used for detection are in some cases nearly constantly on and may provide a nuisance to users, and consume more power. Therefore, there exists a need for improved chamber-less smoke detection. Further, it is often desired to monitor indoor air quality of the same space where the smoke sensors are deployed by detecting the presence of PM2.5 and PM10 particles.

The conventional techniques have been considered satisfactory for their intended purpose. However, there is a need for improved chamberless smoke detectors and air quality detection and monitoring for aircraft. This disclosure provides a solution for this need.

The invention is defined in the appended claims.

Viewed from a first aspect, the invention provides a system for smoke detection and indoor air quality monitoring, comprising: two or more light sources configured to emit light into a monitored space, wherein at least two of the two or more light sources emit respective light cones each having a respective symmetry axis, wherein the symmetry axes of the respective light cones intersect one another; one or more light sensing devices configured to receive scattered light; a processor operatively connected to the one or more light sensing devices to evaluate the scattered light for the presence of one or more indoor air quality conditions in the monitored space; and a polarizing filter optically coupled to a respective one of the light sensing devices wherein an airborne particle type is discriminated via the use the polarizing filter.

In some embodiments, the light sources can be configured to emit light of different wavelengths. A first light source of the one or more light sources can be configured to emit light at a first wavelength in at least one of a UV spectrum or a visible spectrum. A second light source of the one or more light sources can be configured to emit light at a second wavelength in at least one of the visible spectrum or an IR spectrum.

The system may include apertures. Each aperture may be associated with one of the light sources or the light sensing devices.

Optionally, respective sensing portions of at least two of the light sensing devices share a common centerline axis.

In accordance with another aspect the invention provides a method of operating the system of the first aspect. The method includes emitting light from the light sources of the system; and detecting scattered light with the one or more light sensing devices of the system. The detection of scattered light is indicative of one or more indoor air quality conditions in the monitored space.

Emitting light from the one or more light sources can include emitting a first light having a first wavelength from one of the light sources and emitting a second light having a second wavelength from another one of the light sources. The first wavelength can be in at least one of the UV spectrum or the visible spectrum, and the second wavelength can be in at least one of the visible spectrum or the IR spectrum. The method includes discriminating between airborne particle types using the polarizing filter. The method can include determining and monitoring for target gases, particulate contaminants, microbial contaminants or other conditions, in addition to smoke, based on the detected scattered light.

These and other features of the systems and methods of the subject disclosure will become more readily apparent to those skilled in the art from the following detailed description of the preferred embodiments taken in conjunction with the drawings.

So that those skilled in the art to which the subject disclosure appertains will readily understand how to make and use the devices and methods of the subject disclosure without undue experimentation, preferred embodiments thereof will be described in detail herein below by way of example only and with reference to certain figures, wherein:
Fig. 1A is a schematic depiction of an embodiment of a system for smoke detection and indoor air quality monitoring showing an overlap region between the emitting regions and an acceptance cone that forms a sensing volume;
Fig. 1B is a schematic depiction of the system of Fig. 1A, showing an overlap region between the emitting regions and a second acceptance cone that forms a second sensing volume;
Fig. 1C is a schematic depiction of the system of Fig. 1A, showing an overlap region between the emitting regions and a third acceptance cone that forms a third sensing volume;
Fig. 2A is a bottom view of the system of Figs 1A-1C, showing a plurality of light sources and light sensing devices and first and second light emission cones;
Fig. 2B is a bottom view of the system of Figs 1A-1C, showing a plurality of light sources and light sensing device and a plurality of acceptance cones associated with the light sensing devices;
Fig. 3A is a schematic depiction of another embodiment of a system for smoke detection and indoor air quality monitoring showing an overlap region between the emitting regions and an acceptance cone that forms a sensing volume;
Fig. 3B is a schematic depiction of the system of Fig. 3A, showing an overlap region between the emitting regions and a second acceptance cone that forms a second sensing volume;
Fig. 3C is a schematic depiction of the system of Fig. 3A, showing an overlap region between the emitting regions and a third acceptance cone that forms a third sensing volume;
Fig. 4 is a bottom view of the system of Figs. 3A-3C, showing a plurality of light sources and light sensing devices and first and second light emission cones;
Fig. 5 is a schematic diagram of a method of operating a system for smoke detection and indoor air quality monitoring.
Fig. 6A is a bottom view of the system of Figs 1A-1C, showing a mid-scatter acceptance cone and a second light emission cone;
Fig. 6B is a bottom view of the system of Figs 3A-3C, showing a mid-scatter acceptance cone and a second light emission cone;
Fig. 7A is a schematic depiction of the overlap of the mid-scatter acceptance cone and the second light emission cone of Fig. 6A; and
Fig. 7B is a schematic depiction of the overlap of the mid-scatter acceptance cone and the second light emission cone of Fig. 6B, showing the increased sensing volume as compared to Fig. 7A.

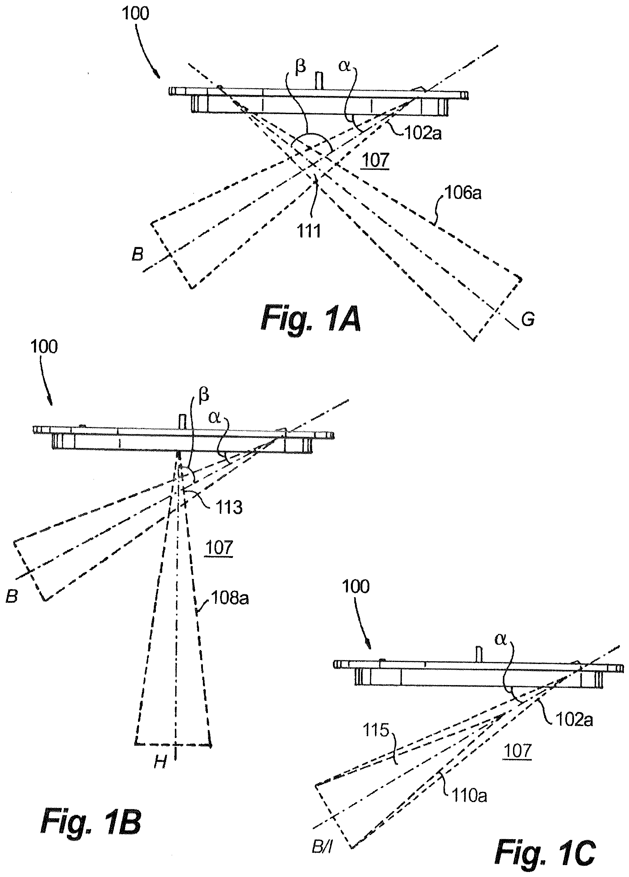

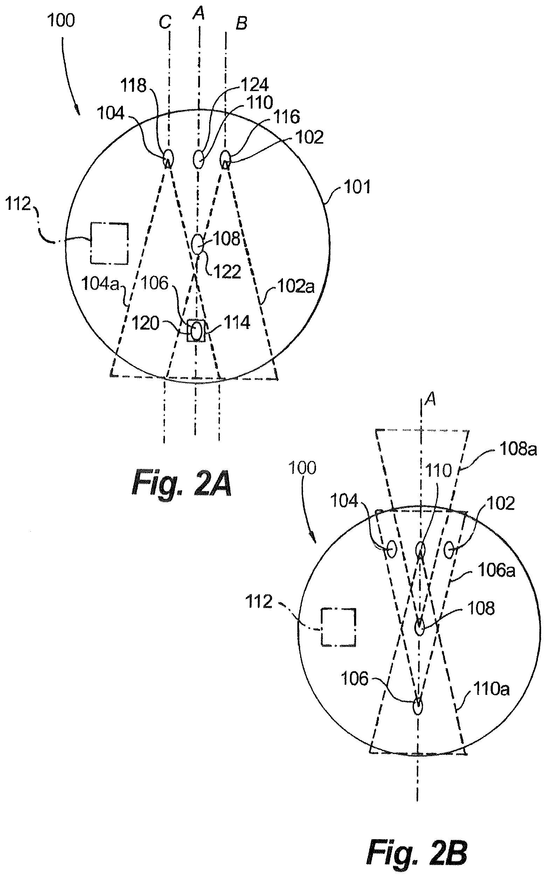

Reference will now be made to the drawings wherein like reference numerals identify similar structural features or aspects of the subject disclosure. For purposes of explanation and illustration, and not limitation, a partial view of a system is shown in Figs. 1A-1B and is designated generally by reference character 100. Other systemsare provided in Figs. 2-7B, as will be described. The systems and methods described herein can be used in systems for chamberless smoke detection and air quality monitoring in aircraft, such as aircraft cabins, cargo areas, and the like.

As shown in Figs. 1A-1C, a chamberless system for smoke detection and indoor air quality monitoring 100 utilizes a photoelectric method for detection of particulates into a monitored space 107. The monitored space 107 is in proximity to detector 100 and extends into the environment being monitored. In buildings, space 107 would extend into a room, duct, elevator shaft, and the like. In an aircraft, space 107 would extend into a cargo bay, aircraft cabin, or electronics rack. The monitored space 107 is dependent upon the spatial placement of light emitting and detection elements within 100.

With reference now to Fig. 2A, system 100 includes light sources 102 and 104 configured to emit light into a monitored space. The first light source 102 and the second light source 104 may include a light emitting diode (LED). The first light source 102 and the second light source 104 may emit light at one or more wavelengths into monitored space 107. In an embodiment, the first light source 102 may emit light of wavelengths characteristic of infrared light, and the second light source 104 may emit light of wavelengths characteristic of blue visible light. The infrared light may be used in the detection and false alarm discrimination of smoke, and the blue visible light may be used in the false alarm discrimination of smoke. Additionally, in some embodiments, a combination of infrared light and ultra-violet light may be used. The light emitted from first and second light sources 102 and 104, respectively, is indicated schematically by the first and second light cones 102a and 104a, respectively. Light cones 102a and 104a define respective symmetry axes B and C that are parallel to one another. Moreover, as shown in Figs. 1A-1C, lights cones 102a and 104a extend downwards at an angle α of about 25 degrees with respect to a bottom surface of the housing 101. Angle α can range from 1 degree to 90 degrees in some embodiments, and 5 degrees to 40 degrees in some cases. This also applies to 202a and 204a, as described below. The downward angle for 102a, 104a, 202a, and 204a are independent parameters. The angles for 102a, 104a, 202a, and 204a can be the same at 25 degrees, or some can be greater or less than 25 degrees.

With continued reference to Fig. 2A-2B, the system 100 includes three light sensing devices 106, 108 and 110 configured to receive scattered light, e.g. light originally emitted from the light sources 102 and/or 104 and then scattered back off any airborne particles, or other obstructions. The system 100 includes a polarizing filter 114 optically coupled to light sensing device 106. Polarizing filter 114 allows discrimination between airborne particle types. Similarly one or more respective polarizing filters 114 can be optically coupled to light sensing devices 108 and 110 and light sources 102 and 104. System 100 includes a housing 101 in which light sources 102 and 104 and light sensing devices 106, 108 and 110 are operatively mounted. The housing 101 can include apertures 116, 118, 120, 122 and 124 associated with the given light sources 102 and 104 and light sensing devices 106, 108 and 110, respectively. Respective sensing portions of light sensing devices 106, 108 and 110, e.g. the portions of light sensing devices 106, 108 and 110 visible in Fig. 2, and their respective apertures 120, 122 and 124 share a common centerline axis A. The sensing volume is depending on the position of the light sensing devices 106, 108, and 110 and the light sources 102 and 104. By positioning the light sensing devices 106, 108 and 110, in a line and reducing distance between light sensing devices 106, 108 and 110, and light sources 102 and 104, the sensing volume reduces. The reduction in sensing volume reduces the intensity of light scattering collected, which tends to reduce light scattering interference from nuisances and solid objects in the monitored space.

With continued reference to Figs. 2A-2B, the light sensing devices 106, 108 and 110 are configured to measure signals, e.g. reflected scattered light, from the first light source 102 and the second light source 104. Each light sensing device 106, 108 and 110 defines a respective acceptance cone 106a, 108a and 110a, respectively. Each acceptance cone 106a, 108a and 110a has a respective central axis G, H and I, respectively. By having the light sensing devices 106, 108 and 110 along the same central axis A, sensing at a close range can be better achieved as compared with traditional sensing systems because there is greater overlap between emitting regions, e.g. the first and second light cones 102a and 104a, and acceptance cones 106a, 108a and 110a of the light sensing devices 106, 108 and 110. Moreover, each sensing volume formed by the overlap, described in more detail below, as compared to traditional sensors, is drawn up closer to the housing 101. This is particularly helpful in aerospace applications where large amounts of cargo may be stored in the monitored space and may be very close, e.g. right under, a given detector system. The detection capability of system 100, even in cargo spaces such as those described above, provide robust detection capabilities to detect various particles and/or to discriminate between particle types. Light sensing devices 106, 108 and 110 can be photodiodes, light sensing devices such as Avalanche PhotoDiodes (APDs), Multi-Pixel Photon Counters (MPPCs), and the like.

As shown in Figs. 1A-2B, in an embodiment, light sensing device 106 is a first light sensing device, the light sensing device 108 is a second light sensing device, and the light sensing device 110 is a third light sensing device. The overlap of the field of view, e.g. acceptance cones 106a, 108a and 110a, with the first and second light cones 102a and 104a form different overlapping sensing volumes 111, 113 and 115, respectively. Light sensing devices 106, 108 and 110 are located within different regions of the system 100 with a line of sight of a light emitted from the first light source 102 (indicated schematically by light cone 102a) and a light emitted from the second light source 104 (indicated schematically by light cone 104a).

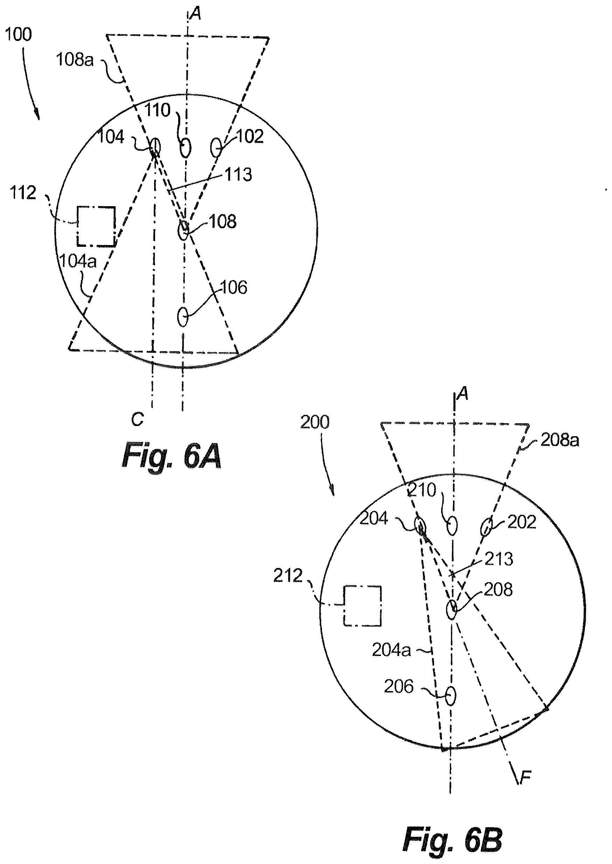

As shown in Fig. 1A, light sensing device 106 is a forward scatter light sensing device and defines an acceptance cone 106a having an acceptance cone axis G. Acceptance cone axis G and the respective axes of light cones 102a and 104a have an angle of coincidence β of 130 degrees. Acceptance cone 106a overlaps with first light cone 102a and second light cone 104a (not visible in the view of Fig. 1A). The overlap defines a forward-scatter sensing volume 111. As shown in Fig. 1B, light sensing device 108 is a mid-scatter light sensing device and defines an acceptance cone 108a having an acceptance cone axis H. Acceptance cone axis H and the respective axes of light cones 102a and 104a have an angle of coincidence β of 65 degrees. Acceptance cone 108a overlaps with first light cone 102a and second light cone 104a (not visible in the view of Fig. 1B). Acceptance cone axis H and the respective axes of light cones 102a and 104a have an angle of coincidence β of 65 degrees. The overlap defines a mid-scatter sensing volume 113 (part of which is also shown in Fig. 6A). As shown in Fig. 1C, light sensing device 110 is a back-scatter light sensing device and defines an acceptance cone 110a that defines an acceptance axis I. Acceptance axis I is substantially parallel to axes of symmetry B and C and defines a zero degree angle of coincidence with both axes. Acceptance cone 110a overlaps with first light cone 102a and second light cone 104a. The overlap defines a back-scatter sensing volume 115. The angle of coincidence β can vary depending on the downward angles for 102a, 104a, 202a, and 204a.

A processor 112 is operatively connected to the light sensing devices 106, 108 and 110 and is configured to evaluate the scattered light for presence of one or more indoor air quality conditions in the monitored space 107. The processor 112 is operatively connected to the plurality of light sources 102 and 104 and the plurality of sensors 106, 108 and 110. The processor 112 includes a memory (not shown) capable of storing executable instructions. The processor 112 can execute the instructions, such as in connection with one or more applications, processes or routines to analyze the signals detected by the plurality of sensors to make alarm decisions, for example, after preset threshold levels are reached.

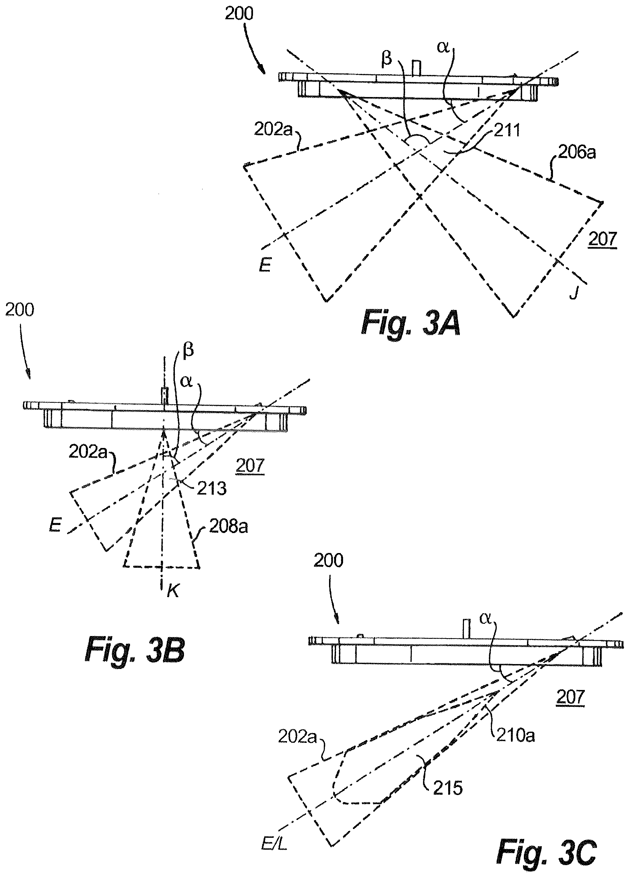

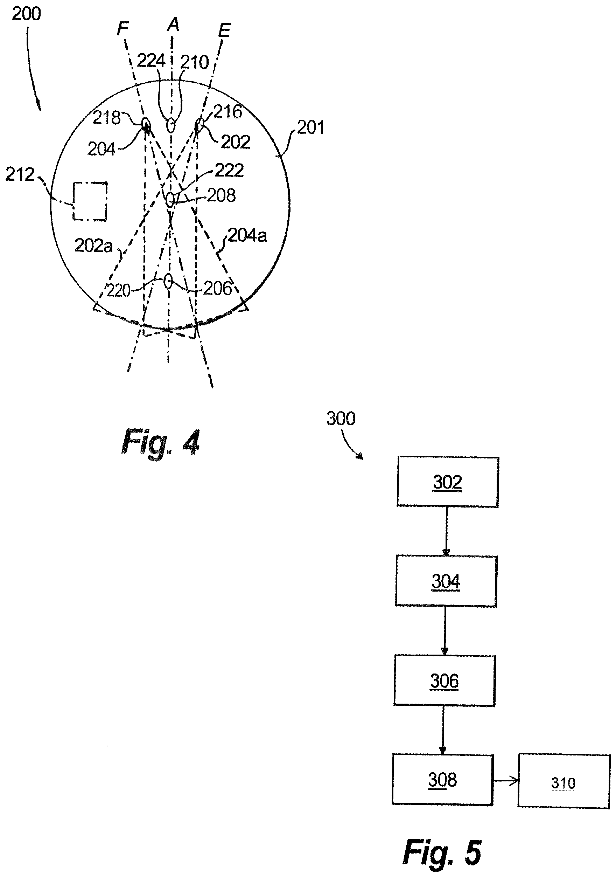

As shown in Figs. 3A-3B and 4, another system for smoke detection and indoor air quality monitoring 200 includes a plurality of light sources 202 and 204 and a plurality of light sensing devices 206, 208 and 210. Light sensing devices 206, 208 and 210 are similar to light sensing devices 106, 108 and 110 described above and the description provided above with respect to light sensing devices 106, 108 and 110 readily applies to light sensing devices 206, 208 and 210. System 200 includes a housing 201, similar to housing 101. Housing 201 includes apertures 216, 218, 220, 222 and 224 associated with the given light sources 202 and 204 and light sensing devices 206, 208 and 210, respectively. In the system 200, the light emitted from light sources 202 and 204 is indicated schematically by light cones 202a and 204a, respectively. Light sources 202 and 204 are similar to light sources 102 and 104 except that light sources 202 and 204, via their respective apertures 216 and 218, for example, are angled toward one another so that the symmetry axes E and F of their respective first and second light cones 202a and 204a, respectively, intersect one another.

With continued reference to Figs. 3A-3B and 4, the first light source 202 and the second light source 204 may include a light emitting diode (LED) and may emit light at one or more wavelengths into a monitored space 207, similar to light sources 102 and 204. The monitored space 207 is similar to that described above with respect to Fig. 1. Similar to first light source 102 and second light source 104, first light source 202 may emit light of wavelengths characteristic of infrared light, and the second light source 204 may emit light of wavelengths characteristic of blue visible light. The infrared light may be used in the detection and false alarm discrimination of smoke, and the blue visible light may be used in the false alarm discrimination of smoke. Additionally, in some embodiments, a combination of infrared light and ultra-violet light may be used. System 200 can also include a polarizing filter, similar to filter 114.

With continued reference to Figs. 3A-3B and 4, light sensing devices 206, 208 and 210 are located within different regions of the system 200 with a line of sight of a light emitted from the first light source 202 (indicated schematically by light cone 202a) and a light emitted from the second light source 204 (indicated schematically by light cone 204a). The overlap of the field of view, e.g. acceptance cones 206a, 208a and 210a, with the first and second light cones 202a and 204a form different overlapping sensing volumes. Acceptance cones 206a, 208a and 210a and their axes (discussed more below) are very similar to acceptance cones 106a, 108a and 110a depicted in Fig. 2B for system 100.

As shown in Fig. 3A, light sensing device 206 is a forward scatter light sensing device and defines an acceptance cone 206a having an acceptance cone axis J. Acceptance cone axis J and the respective axes of light cones 202a and 204a have an angle of coincidence β of 130 degrees. Acceptance cone 206a overlaps with first light cone 202a and second light cone 204a (not visible in the view of Fig. 3A). The overlap defines a forward-scatter sensing volume 211. As shown in Fig. 3B, light sensing device 208 is a mid-scatter light sensing device and defines an acceptance cone 208a having an acceptance cone axis K. Acceptance cone axis K and the respective axes of light cones 202a and 204a have an angle of coincidence β of 65 degrees. Acceptance cone 208a overlaps with first light cone 202a and second light cone 204a (not visible in the view of Fig. 3B). The overlap defines a mid-scatter sensing volume 213. As shown in Fig. 3C, light sensing device 210 is a back-scatter light sensing device and defines an acceptance cone 210a that defines an acceptance axis L. Symmetry axis E of light cone 202a would be extending partially in/out of the page as oriented in Fig. 3C. Acceptance cone 210a and acceptance axis L overlap light cone 202a and its respective symmetry axis E in the view of Fig. 3C due to the zero degree angle of coincidence. Acceptance cone 210a overlaps with first light cone 202a and second light cone 204a. The overlap defines a back-scatter sensing volume 215.

By having the emissions of light sources 202 and 204 angled toward one another, sensing at a close range can be better achieved as compared with traditional sensing systems because there is greater overlap between emitting regions, e.g. the first and second light cones 202a and 204a, and sensing regions of light sensing devices 206, 208 and 210, even more of an overlap than system 100. This is particularly helpful in aerospace applications where large amounts of cargo may be stored in the monitored space and may be very close, e.g. right under, a given detector system 100 or 200. The detection capability of system 200, even in cargo spaces such as those described above, provide robust detection capabilities to detect various particles and/or to discriminate between particle types.

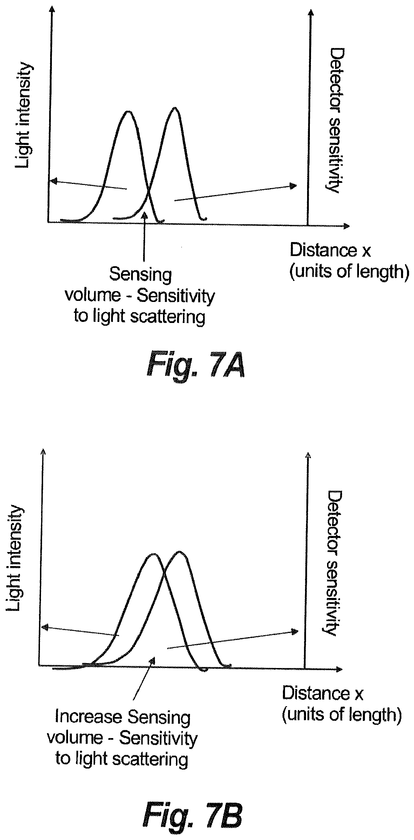

Figs. 6A and 6B provide a comparison of the sensing volumes between systems 100 and 200. System 100 is depicted in Fig. 6A and system 200 is depicted in Fig. 6B. As shown by Fig. 6B, by having the light cones 202a and 204a of light sources 202 and 204 angled toward one another, sensing at a close range, e.g. via the mid-scatter light sensing device 208, can be better achieved as compared with system 100 because there is greater overlap between the first and second light cones 202a and 204a (only cone 204a is shown for sake of simplicity) and acceptance cone 208a a larger sensing volume 213 is formed as compared with sensing volume 213. This is further exemplified by the charts of Figs. 7A and 7B. Fig. 7A is associated with system 100 and Fig. 7B is associated with system 200. Figs. 7A and 7B show how the distribution of light intensity from the respective light sources and light-sensor sensitivity form their respective sensing volumes.

As shown in Fig. 5, a method 300 of operating a system for smoke detection and indoor air quality monitoring, e.g. systems 100 or 200, includes emitting light from two or more light sources, e.g. light sources 102, 104, 202 or 204, of the system into a monitored space, as indicated schematically by box 302. Emitting light from the light sources includes emitting light from two light sources as respective light cones, e.g. light cones, 102a and 104a or 202a and 204a. Emitting light from the light sources includes emitting a first light having a first wavelength from one of the light sources and emitting a second light having a second wavelength from the other one of the light sources. The first wavelength is in at least one of the UV spectrum or the visible spectrum, and the second wavelength is in at least one of the visible spectrum or the IR spectrum.

The method 300 includes polarizing light entering into at least one of light sensing devices, e.g. light sensing devices 106, 108, or 110, or light sensing devices 206, 208 or 210, with a polarizing filter, e.g. polarizing filter 114, as indicated schematically by box 304. Polarized light refers to the orientation of the electric field with respect to the symmetry axes of the light cone and the normal vector to the surface of the detector 100. The light sources 102, 104, 202 or 204 can emit polarized light with the electric field oriented parallel to the normal vector, perpendicular or an arbitrary angle. In addition, the polarizing filter 114 on light sensing devices 106, 108, or 110, or light sensing devices 206, 208 or 210 can be oriented so that the fast axis of the polarizing accepts light polarized with a particular orientation. Light scattering by a material is polarization dependent for most materials. The orientation of the polarizing filter on the light sources and light sensing devices are oriented to enhance the difference between particulate scattering of interest and nuisances such as bugs or solid objects such as cargo containers.

The method 300 includes discriminating between airborne particle types using the polarizing filter, as indicated schematically by box 306. The method 300 includes detecting scattered light with the light sensing devices of the system, as indicated schematically by box 308. The detection of scattered light is indicative of one or more indoor air quality conditions in the monitored space. The method includes determining and monitoring for target gases, particulate contaminants, microbial contaminants or other conditions, in addition to smoke, based on the detected scattered light, as indicated schematically by box 310.

Those skilled in the art will readily appreciate that the transmitted light (e.g. from LEDs 102, 104, 202 or 404) excites fluorescent particles, such as mold or pollen particles or other microbial contaminants, in the space. One or more of the light sensing devices, e.g. 106, 108, 110, 206, 208 or 210 of the systems 100 or 200, are utilized to sense light emitted (e.g. scattered back) from the fluorescent particles. The system may be utilized to detect or monitor the space for the presence of gaseous species in the space. The target gaseous species may include CO, radon, H₂S, VOCs, refrigerants, hydrocarbons or others. Optionally, systems 100 and 200 are configured to detect an ambient light level in the space to improve sensitivity and reliability of detection smoke and for other indoor air quality monitoring and detection. The systems disclosed herein allow for systems 100 and 200 to detect and monitor other indoor air quality conditions, such as target gases, particulate contaminants, microbial contaminants or other conditions, in addition to smoke. This eliminates the need for additional, separately powered indoor air quality sensors to be utilized in the same space in which the smoke detector is placed, resulting in substantial consumer and business cost savings.

The methods and systems of the present disclosure, as described above and shown in the drawings, provide smoke detection and indoor air quality monitoring with superior properties including increased sensing robustness in aerospace applications that are better able to meet Federal Aviation Administration (FAA) requirements. While the apparatus and methods of the subject disclosure have been shown and described with reference to preferred embodiments, those skilled in the art will readily appreciate that changes and/or modifications may be made thereto without departing from the scope of the invention, as defined by the claims.

## Claims

1. A system (100; 200) for smoke detection and indoor air quality monitoring, comprising:
two or more light sources (102, 104; 202, 204) configured to emit light into a monitored space, wherein at least two of the two or more light sources emit respective light cones each having a respective symmetry axis, wherein the symmetry axes of the respective light cones intersect one another;
one or more light sensing devices (106, 108, 110; 206, 208, 210) configured to receive scattered light;
a processor (112; 212) operatively connected to the one or more light sensing devices to evaluate the scattered light for the presence of one or more indoor air quality conditions in the monitored space; and
a polarizing filter (114) optically coupled to a respective one of the light sensing devices wherein an airborne particle type is discriminated via the use the polarizing filter.

2. The system of claim 1, wherein at least two of the light sensing devices share a common centerline axis.

3. The system of claim 1 or 2, wherein the two or more light sources are configured to emit light of different wavelengths.

4. The system of any preceding claim, wherein a first light source of the two or more light sources is configured to emit light at a first wavelength in at least one of the UV spectrum or the visible spectrum, and optionally wherein a second light source of the two or more light sources is configured to emit light at a second wavelength in at least one of the visible spectrum or the IR spectrum.

5. The system of any preceding claim, comprising: at least three light sensing devices, wherein respective sensing portions of the three light sensing devices share a common centerline axis.

6. The system of any preceding claim, wherein the light sources are configured to emit light of different wavelengths.

7. The system of any preceding claim, wherein a first light source of the light sources is configured to emit light at a first wavelength in at least one of a UV spectrum or a visible spectrum, and optionally wherein a second light source of the one or more light sources is configured to emit light at a second wavelength in at least one of the visible spectrum or an IR spectrum.

8. The system of any preceding claim, further comprising apertures, wherein each aperture is associated with one of the light sources or the light sensing devices.

9. A method of operating a system for smoke detection and indoor air quality monitoring, wherein the system is as claimed in claim 5 or any of claims 6 to 8 when depending on claim 5, the method comprising:
emitting light from the light sources of the system; and
detecting scattered light with the light sensing devices of the system

10. The method of claim 9, wherein emitting light from the light sources includes emitting a first light having a first wavelength from one of the light sources, wherein the first wavelength is in at least one of the UV spectrum or the visible spectrum, and emitting a second light having a second wavelength from another one of the light sources, wherein the second wavelength is in at least one of the visible spectrum or the IR spectrum.

11. The method of claim 9, comprising determining and monitoring for target gases, particulate contaminants, microbial contaminants or other conditions, in addition to smoke.

## Patentansprüche

1. System (100; 200) zur Raucherkennung und Überwachung der Raumluftqualität, umfassend:
zwei oder mehr Lichtquellen (102, 104; 202, 204), die dazu konfiguriert sind, Licht in einen überwachten Raum zu emittieren, wobei mindestens zwei der zwei oder mehr Lichtquellen jeweilige Lichtkegel emittieren, die jeweils eine jeweilige Symmetrieachse aufweisen, wobei die Symmetrieachsen der jeweiligen Lichtkegel einander überschneiden;
eine oder mehrere Lichterfassungsvorrichtungen (106, 108, 110; 206, 208, 210), die dazu konfiguriert sind, Streulicht zu empfangen;
einen Prozessor (112; 212), der mit der einen oder den mehreren Lichterfassungsvorrichtungen wirkverbunden ist, um das Streulicht hinsichtlich des Vorhandenseins von einer oder mehreren Raumluftqualitätsbedingungen in dem überwachten Raum zu bewerten; und
ein Polarisationsfilter (114), das optisch an eine jeweilige eine der Lichterfassungsvorrichtungen gekoppelt ist, wobei ein Partikeltyp an Bord über die Verwendung des Polarisationsfilters unterschieden wird.

2. System nach Anspruch 1, wobei mindestens zwei der Lichterfassungsvorrichtungen eine gemeinsame Mittellinienachse teilen.

3. System nach Anspruch 1 oder 2, wobei die zwei oder mehr Lichtquellen dazu konfiguriert sind, Licht mit unterschiedlichen Wellenlängen zu emittieren.

4. System nach einem der vorstehenden Ansprüche, wobei eine erste Lichtquelle der zwei oder mehr Lichtquellen dazu konfiguriert ist, Licht mit einer ersten Wellenlänge in mindestens einem von dem UV-Spektrum oder dem sichtbaren Spektrum zu emittieren, und wobei optional eine zweite Lichtquelle der zwei oder mehr Lichtquellen dazu konfiguriert ist, Licht mit einer zweiten Wellenlänge in mindestens einem von dem sichtbaren Spektrum oder dem IR-Spektrum zu emittieren.

5. System nach einem der vorstehenden Ansprüche, umfassend:
mindestens drei Lichterfassungsvorrichtungen, wobei jeweilige Erfassungsbereiche der drei Lichterfassungsvorrichtungen eine gemeinsame Mittellinienachse teilen.

6. System nach einem der vorstehenden Ansprüche, wobei die Lichtquellen dazu konfiguriert sind, Licht mit unterschiedlichen Wellenlängen zu emittieren.

7. System nach einem der vorstehenden Ansprüche, wobei eine erste Lichtquelle der Lichtquellen dazu konfiguriert ist, Licht mit einer ersten Wellenlänge in mindestens einem von einem UV-Spektrum oder einem sichtbaren Spektrum zu emittieren, und wobei optional eine zweite Lichtquelle der einen oder mehreren Lichtquellen dazu konfiguriert ist, Licht mit einer zweiten Wellenlänge in mindestens einem von dem sichtbaren Spektrum oder einem IR-Spektrum zu emittieren.

8. System nach einem der vorstehenden Ansprüche, ferner umfassend Blenden, wobei jede Blende einer der Lichtquellen oder der Lichterfassungsvorrichtungen zugeordnet ist.

9. Verfahren zum Betreiben eines Systems zur Raucherkennung und Überwachung der Raumluftqualität, wobei das System dem in Anspruch 5 oder einem der Ansprüche 6 bis 8 bei Abhängigkeit von Anspruch 5 beanspruchten entspricht, wobei das Verfahren Folgendes umfasst:
Emittieren von Licht von den Lichtquellen des Systems; und
Erkennen von Streulicht mit den Lichterfassungsvorrichtungen des Systems.

10. Verfahren nach Anspruch 9, wobei das Emittieren von Licht von den Lichtquellen Emittieren eines ersten Lichts mit einer ersten Wellenlenge von einer der Lichtquellen, wobei die erste Wellenlänge in mindestens einem von dem UV-Spektrum oder dem sichtbaren Spektrum liegt, und Emittieren eines zweiten Lichts mit einer zweiten Wellenlänge von einer anderen einen der Lichtquellen, wobei die zweite Wellenlänge in mindestens einem von dem sichtbaren Spektrum oder dem IR-Spektrum liegt, beinhaltet.

11. Verfahren nach Anspruch 9, umfassend Bestimmen und Überwachen auf Zielgase, teilchenförmige Verunreinigungen, mikrobielle Verunreinigungen oder andere Bedingungen zusätzlich zu Rauch.

## Revendications

1. Système (100 ; 200) de détection de fumée et de surveillance de la qualité d'air intérieur, comprenant :
deux sources lumineuses ou plus (102, 104 ; 202, 204) conçues pour émettre de la lumière dans un espace surveillé, dans lequel au moins deux des deux sources lumineuses ou plus émettent des cônes lumineux respectifs ayant chacun un axe de symétrie respectif, dans lequel les axes de symétrie des cônes lumineux respectifs se croisent les uns les autres ;
un ou plusieurs dispositifs de détection de lumière (106, 108, 110 ; 206, 208, 210) conçus pour recevoir de la lumière diffusée ;
un processeur (112 ; 212) relié de manière opérationnelle aux un ou plusieurs dispositifs de détection de lumière pour évaluer la lumière diffusée pour la présence d'une ou de plusieurs conditions de qualité d'air intérieur dans l'espace surveillé ; et
un filtre polarisant (114) couplé optiquement à un dispositif respectif des dispositifs de détection de lumière, dans lequel un type de particules en suspension dans l'air est distingué par l'utilisation du filtre polarisant.

2. Système selon la revendication 1, dans lequel au moins deux des dispositifs de détection de lumière partagent un axe central commun.

3. Système selon la revendication 1 ou 2, dans lequel les deux sources lumineuses ou plus sont conçues pour émettre de la lumière de différentes longueurs d'onde.

4. Système selon une quelconque revendication précédente, dans lequel une première source lumineuse des deux sources lumineuses ou plus est conçue pour émettre de la lumière à une première longueur d'onde dans au moins l'un du spectre UV ou du spectre visible, et éventuellement dans lequel une seconde source lumineuse des deux sources lumineuses ou plus est conçue pour émettre de la lumière à une seconde longueur d'onde dans au moins l'un du spectre visible ou du spectre IR.

5. Système selon une quelconque revendication précédente, comprenant : au moins trois dispositifs de détection de lumière, dans lequel des parties de détection respectives des trois dispositifs de détection de lumière partagent un axe central commun.

6. Système selon une quelconque revendication précédente, dans lequel les sources lumineuses sont conçues pour émettre de la lumière de différentes longueurs d'onde.

7. Système selon une quelconque revendication précédente, dans lequel une première source lumineuse des sources lumineuses est conçue pour émettre de la lumière à une première longueur d'onde dans au moins l'un d'un spectre UV ou d'un spectre visible, et éventuellement dans lequel une seconde source lumineuse des une ou plusieurs sources lumineuses est conçue pour émettre de la lumière à une seconde longueur d'onde dans au moins l'un du spectre visible ou d'un spectre IR.

8. Système selon une quelconque revendication précédente, comprenant en outre des ouvertures, dans lequel chaque ouverture est associée à l'un(e) des sources lumineuses ou des dispositifs de détection de lumière.

9. Procédé de fonctionnement d'un système de détection de fumée et de surveillance de la qualité d'air intérieur, dans lequel le système est tel que revendiqué dans la revendication 5 ou l'une quelconque des revendications 6 à 8 lorsqu'elles dépendent de la revendication 5, le procédé comprenant :
l'émission de lumière depuis les sources lumineuses du système ; et
la détection de lumière diffusée avec les dispositifs de détection de lumière du système.

10. Procédé selon la revendication 9, dans lequel l'émission de lumière depuis les sources lumineuses comporte l'émission d'une première lumière ayant une première longueur d'onde depuis l'une des sources lumineuses, dans lequel la première longueur d'onde est dans au moins l'un du spectre UV ou du spectre visible, et l'émission d'une seconde lumière ayant une seconde longueur d'onde depuis une autre des sources lumineuses, dans lequel la seconde longueur d'onde est dans au moins l'un du spectre visible ou du spectre IR.

11. Procédé selon la revendication 9, comprenant la détermination et la surveillance de gaz cibles, de contaminants particulaires, de contaminants microbiens ou d'autres conditions, en plus de la fumée.
